# EUROPEAN PATENT APPLICATION

(11) **EP 4 618 520 A1**
(43) Date of publication of application: **17.09.2025**
(21) Application number: 23890259.7
(22) Date of filing: 20.07.2023
(51) Int. Cl.: H04L 69/16

(54) **DATA PACKET TRANSMISSION METHOD, SWITCH, AND STORAGE MEDIUM**

(30) Priority: 18.11.2022 CN 202211446889
(71) Applicant: ZTE CORPORATION, Shenzhen, Guangdong 518057 (CN)
(72) Inventor: LIN, Ning, Shenzhen, Guangdong 518057 (CN)
(74) Representative: Ziebig Hengelhaupt Intellectual Property Attorneys Patentanwaltskanzlei PartGmbB
(86) International application number: PCT/CN2023/108368
(87) International publication number: WO 2024/103817

(57) **Abstract**

The present application relates to the technical field of communications, and discloses a data packet transmission method, a switch, and a storage medium. The data packet transmission method of embodiments of the present application comprises: acquiring a port aggregation group corresponding to a destination address of a data packet to be transmitted, wherein the port aggregation group comprises at least one node, the node has a port attribute and a forwarding attribute, and the port aggregation group indicates an exit of an overlay network of the data packet; performing a hash calculation on the data packet on the basis of a first hash rule pre-configured for the port aggregation group, to obtain a first hash value; acquiring a target node matching the first hash value in the port aggregation group, wherein the exit of the target node points to an underlay network; acquiring next-hop information on the basis of the forwarding attribute of the target node; and transmitting the data packet on the basis of the next-hop information.

## Description

### CROSS-REFERENCE TO RELATED APPLICATIONS

The present application claims priority to Chinese patent application No. 202211446889.7 filed on November 18, 2022 to the China Patent Office, and entitled "DATA PACKET TRANSMISSION METHOD, SWITCH, AND STORAGE MEDIUM", the entire content of which is incorporated herein by reference.

### TECHNICAL FIELD

The present application belongs to the technical field of communications, and specifically relates to a data packet transmission method, a switch, and a storage medium.

### BACKGROUND

In a data center scenario, there may be a case where an overlay network (which may also be called a virtual network constructed on the basis of a tunneling technology) layer and an underlay network layer form equal cost multi paths (ECMPs) respectively. In this case, when traffic passes through, an ECMP hash calculation needs to be performed for the traffic of the overlay network layer, and then an ECMP hash calculation needs to be performed in the underlay network layer, which ultimately forms an exit traffic effect. Processing of this traffic model may be accomplished adopting direct table writing of a chip to the overlay ECMP and the underlay ECMP, but currently most chips do not support a function of an ECMP table pointing directly to an ECMP table.

### SUMMARY

Embodiments of the present application provide a data packet transmission method, a switch, and a storage medium, which can solve the issue that a chip does not support an ECMP table pointing directly to an ECMP table.

In a first aspect, a data packet transmission method is provided, applied to a terminal, including: acquiring a port aggregation group corresponding to a destination address of a data packet to be transmitted, in which the port aggregation group includes at least one node, the node has a port attribute and a forwarding attribute, and the port aggregation group indicates an exit of an overlay network of the data packet; performinga hash calculation on the data packet on the basis of a first hash rule pre-configured for the port aggregation group, to obtain a first hash value; acquiring a target node matching the first hash value in the port aggregation group, in which theexit of the target node points to an underlay network; acquiring next-hop information on the basis of a forwarding attribute of the target node; and transmitting the data packet on the basis of the next-hop information.

In a second aspect, a switch is provided. The terminal includes a processor and a memory. The memory stores a program or instructions runnable on the processor. The program or instructions, when executed by the processor, implement steps of the method according to the first aspect.

In a third aspect, a readable storage medium is provided, storing a program or instructions thereon. The program or instructions, when executed by a processor, implement steps of the method according to the first aspect.

In a fourth aspect, a chip is provided, including a processor and a communication interface. The communication interface is coupled to the processor. The processor is configured to run a program or instructions to implement steps of the method according to the first aspect.

In a fifth aspect, a computer program/program product is provided, stored in a storage medium. The computer program/program product is executed by at least one processor to implement steps of the method according to the first aspect.

### BRIEF DESCRIPTION OF DRAWING(S)

FIG. 1 shows a schematic flowchart of a data packet transmission method in an embodiment of the present application.
FIG. 2 shows a schematic diagram of a path in an embodiment of the present application.
FIG. 3 shows a schematic diagram of one possible implementation of utilizing a VP to implement ECMP iterations for an overlay and an underlay in an embodiment of the present application.
FIG. 4 shows a schematic diagram of one possible implementation of utilizing a loopback port to implement ECMP iterations for an overlay and an underlay in an embodiment of the present application.
FIG. 5 shows a schematic structural diagram of a switch provided by an embodiment of the present application.

### DETAILED DESCRIPTION

Technical solutions in embodiments of the present application will be clearly described below in conjunction with accompanying drawings in the embodiments of the present application. Apparently, the described embodiments are part of the embodiments of the present application, not all of them. Based on the embodiments in the present application, all other embodiments obtained by those of ordinary skill in the art belong to the scope of protection of the present application.

Terms "first", "second" and the like in the specification and claims of the present application are used to distinguish similar objects, not used to describe a specific order or sequence. It should be understood that terms so used may be interchanged in appropriate cases so that the embodiments of the present application can be implemented in an order other than those illustrated or described here, the objects distinguished by "first" and "second" are usually of one type, and the number of the objects is not limited, e.g., there may be one or a plurality of first objects. In addition, "and/or" in the specification and claims indicates at least one of connected objects, and a character "/" generally indicates that front and back associated objects are in an "or" relationship.

Aiming at the issue that chips do not support a function of an ECMP table pointing directly to an ECMP table, an ECMP that uses a flattening manner for processing is proposed in the related art, which flattens layers of an overlay and an underlay (i.e., the ECMP table is used only once, not the overlay ECMP pointing to the underlay ECMP), i.e., specific exits and tunnel encapsulations are all written into the ECMP table, and an operation of a traffic effect as close as possible to two-layer ECMP hash is performed using a possible hash algorithm. Then, a data packet seen by the overlay is a user-side packet, while a data packet seen by the underlay is a network-side packet, and HASH modes of their packets are different, therefore, the ECMP processed in the flattening manner can only achieve an effect close to the real two-layer HASH, but cannot achieve an effect that is consistent with the real two-layer HASH.

In order to solve the issue that chips do not support a function of an ECMP table pointing directly to an ECMP table, an embodiment of the present application provides a data packet transmission solution that may solve the issue that the chips do not support a function of an ECMP table pointing directly to an ECMP table, and may further achieve the effect that is consistent with the real two-layer HASH.

A data packet transmission method provided by an embodiment of the present application is described in detail below via some embodiments and application scenarios thereof in conjunction with accompanying drawings.

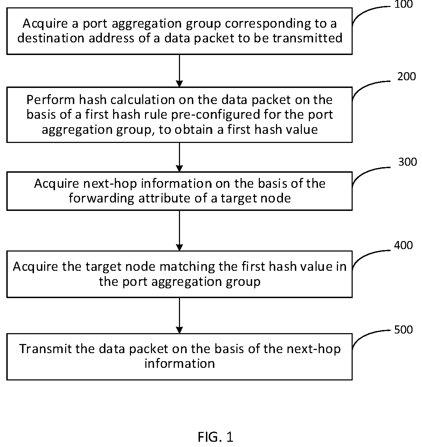

FIG. 1 shows a schematic flowchart of a data packet transmission method in an embodiment of the present application. The method may be performed by a communication device. In other words, the method may be performed by software or hardware installed on the communication device. The communication device may be a switch. As shown in FIG. 1, the method may include the following steps.

Step 100: a port aggregation group corresponding to a destination address of a data packet to be transmitted is acquired, in which the port aggregation group includes at least one node, the node has a port attribute and a forwarding attribute, and the port aggregation group indicates an exit of an overlay network of the data packet.

It may be understood that since a node has the forwarding attribute as well as the port attribute, the port attribute enables the node to be added to one port aggregation group (Trunk group). Replacing an exit of an overlay ECMP with a Trunk group may be realized using the port aggregation group to indicate the exit of the overlay network of the data packet.

In the embodiment of the present application, a correspondence between the destination address and the Trunk group may be preset, and then the corresponding Trunk group may be found according to the destination address of the data packet to be transmitted.

Step 200: a hash calculation is performed on the data packet on the basis of a first hash rule pre-configured for the port aggregation group, to obtain a first hash value.

As may be seen from step 100, replacing the exit of the overlay ECMP with one Trunk group may be realized. Since both the Trunk group and the ECMP group have a capability of load balancing calculation, and their calculation manner is also using a combination of five-tuples to perform the HASH calculation, the Trunk group may be used to replace the ECMP group to perform the hash calculation.

Step 300: a target node matching the first hash value in the port aggregation group is acquired, in which theexit of the target node points to an underlay network.

It may be understood that since each member in the Trunk group is a node, the target node matching the first hash value is found in the Trunk group. Exit information of the underlay network is written into the target node utilizing an attribute that the target node can point to the exit, thus completing that the exit of the target node points to anunderlay network.

Step 400: next-hop information is acquired on the basis of a forwarding attribute of the target node.

In an implementation, the node includes a virtual private, and the forwarding attribute includes a pointing-to-exit attribute. Before acquiring the next-hop information on the basis of the forwarding attribute of the target node, the method further includes: setting the pointing-to-exit attribute of the target node in the port aggregation group as the next-hop information.

It may be understood that as may be seen from step 300, the exit of the target node points to an underlay network, and therefore specific exit information may be acquired via the pointing-to-exit attribute included in the forwarding attribute of the virtual private (VP).

Step 500: the data packet is transmitted on the basis of the next-hop information.

It may be understood that the next-hop information includes the specific exit information, so that the data packet may be transmitted according to the exit information.

In the embodiment of the present application, first the port aggregation group corresponding to the destination address of the data packet to be transmitted is acquired, in which the port aggregation group includes at least one node, the node has the port attribute and the forwarding attribute, and the port aggregation group indicates the exit of the overlay network of the data packet. In this way, the exit of the overlay ECMP is replaced with one port aggregation group, and then the hash calculation is performed on the data packet on the basis of the first hash rule pre-configured for the port aggregation group, to obtain the first hash value, so that the overlay may perform the hash calculation using the hash rule for the port aggregation group. Then the target node matching the first hash value in the port aggregation group is acquired according to the first hash value, in which the exit of the target node points to the underlay network. The next-hop information is acquired on the basis of the forwarding attribute of the target node. The data packet is transmitted on the basis of the next-hop information. In this way, the overlay may use the hash rule for the port aggregation group to complete the hash calculation without using the ECMP table, while the underlay may use the hash rule for the ECMP to complete two layers of different hash algorithms and satisfy the two layers of ECMP load balancing data forwarding, which is more convenient to implement, better hierarchical, and more conducive to processing of changes of different layers of information.

With the technical solution provided by the embodiment of the present application, the overlay may use the hash rule for the port aggregation group to complete the hash calculation without using the ECMP table, and a two-layer HASH route may also be realized when a chip does not support an ECMP table pointing directly to an ECMP table.

In an implementation, in a case where the exit of the target node points to an exit equal cost multi path (ECMP) group, acquiring the next-hop information on the basis of the forwarding attribute of the target node may include the following step 210 to step 230.

Step 210: the exit ECMP group corresponding to the target node is acquired.

In an implementation, the node may be a virtual private, and the forwarding attribute may include a pointing-to-exit attribute. In the implementation, before acquiring the exit ECMP group corresponding to the target node, the method further includes: setting the pointing-to-exit attribute of the target node in the port aggregation group as the exit ECMP group.

Specifically, the exit information of the underlay network is written into the target node utilizing the attribute that the target node can point to the exit. In a case where the exit of the target node points to the exit equal cost multi path (ECMP) group, exit information of the ECMP group is directly written into the target node as the exit information of the target node, so that the exit ECMP group corresponding to the target node may be acquired.

In another implementation, the node may also be a loopback port. The forwarding attribute may include a loopback forwarding attribute. In the possible implementation, the exit ECMP group of the data packet utilizing the loopback forwarding attribute of the loopback port. Therefore, in the possible implementation, step 210 may include the following.

Step 211: target tunnel encapsulation information corresponding to the target node is acquired.

Step 212: the data packet is encapsulated according to the target tunnel encapsulation information and then forwarded via the loopback port.

Step 213: the loopback data packet is received via the loopback port, and the exit ECMP group corresponding to an underlay route is acquired according to the underlay route of the loopback data packet.

Optionally, the target tunnel encapsulation information may include a source address and a destination address of a tunnel.

In the above possible implementation, since the loopback port has a capability of secondary forwarding, when the data packet points to the loopback port for the first time, it is the tunnel encapsulation information that completes forwarding at the overlay layer. Whereas after the loopback data packet is received via the loopback port for the second time, the route exit of the underlay may be directly found according to information of the loopback data packet.

In an implementation, before acquiring the port aggregation group corresponding to the destination address of the data packet to be transmitted, the method further includes: configuring tunnel encapsulation information corresponding to each loopback port in the port aggregation group.

It may be understood that each loopback port corresponds to a different tunnel. The data packet may be sent via these tunnels. Since the tunnels have different network protocols, tunnel encapsulation headers may also be different when tunnel encapsulations are performed on the packets, so it is necessary to configure the tunnel encapsulation information corresponding to each loopback port in the port aggregation group according to attribute information of the tunnels.

Step 220: hash calculation is performed on the data packet on the basis of a second hash rule pre-configured for the ECMP group, to obtain a second hash value.

Specifically, the second hash rule may be pre-configured for the ECMP group obtained via step 210, and the second hash value of the data packet is obtained according to the second hash rule. Optionally, the second hash rule may be a five-tuple hash algorithm rule, e.g., hash calculation is performed for a five-tuple of the data packet to obtain the second hash value.

Step 230: next-hop information matching the second hash value in the exit ECMP group is acquired.

It may be understood that the next-hop information contains specific exit information.

In the embodiment of the present application, the Underlay layer may directly use the ECMP table of the chip, and processing related to the underlay ECMP is completed via the ECMP table, in which a correspondence between a ECMP group and at least one of next-hop information is recorded in the ECMP table, and the next-hop information matching the second hash value in the exit ECMP group may be acquired via the hash calculation.

In the above implementation, the target node may point to an exit next hop, and the Trunk group has an attribute that a HASH algorithm can be configured. Therefore, the target node is made to point to the exit of overlay, and the Trunk group is configured to be consistent with a hash algorithm mode of the overlay ECMP, which can replace a case where the exit of the overlay ECMP is made to point directly to the underlay ECMP. With such a replacement, pointing of the target node to the exit next hop may be completed, and the replacement of the hash algorithm of the ECMP may also be completed by the Trunk group. While at the underlay layer, the ECMP table of the chip is used directly, processing related to the underlay ECMP is completed with the ECMP table, so that the exit ECMP information of the underlay may be obtained, and this information may exactly be written into the target node. Ultimately, an effect of overlay ECMP nesting underlay ECMP is completed, i.e., a logical relationship Overlay->trunk->VP->underlay ECMP. The overlay and the underlay may be respectively controlled in different hash modes by controlling a hash mode of the trunk group and a hash mode of the ECMP group.

In an implementation, before acquiring the port aggregation group corresponding to the destination address of the data packet to be transmitted, the method further includes: configuring the port aggregation group; and configuring a source provider edge (PE) device and a destination PE device of an overlay path corresponding to each node in the port aggregation group.

Exemplarily, a path from a first PE device to a second PE device includes a path A and a path B. A virtual port may be set to represent an overlay path where PE1 points to PE2.

In an implementation, the data packet transmission method may further include: updating, in a case where an overlay path corresponding to the at least one node in the port aggregation group changes, the port aggregation group and the overlay path corresponding to the node in the port aggregation group on the basis of changed information of the at least one node.

In an implementation, the data packet transmission method further includes: updating the next-hop information of the exit ECMP group when the next-hop information in the exit ECMP group changes.

It may be understood that when information related to the overlay changes, it is only necessary to make a related change to the node in the trunk group, while when information of the underlay changes, it is only necessary to process an information change in the ECMP group. In this way, after hierarchical processing, it can be directly in one-to-one correspondence with hierarchical information changes of the overlay and the underlay.

It may be understood that the trunk may select a HASH field for a user-layer packet, while the ECMP of the underlay may select a HASH field for a tunnel-encapsulated packet in the ECMP table. Therefore, HASH may select different HASH fields for the user-layer packet and the tunnel-encapsulated packet respectively, thus enriching the HASH processing for different layers of packets. When the information related to the overlay changes, it is only necessary to make the related change to the node in the trunk group. When the information of the underlay changes, it is only necessary to process the information change in the ECMP group. Such hierarchical processing is more convenient to implement, better hierarchical, and more conducive to processing of changes of different layers of information.

In a possible implementation, the node may be a virtual private, and the forwarding attribute of the virtual private may be a pointing-to-exit attribute, i.e., the virtual private points directly to next-hop information. In the possible implementation, before acquiring the next-hop information on the basis of the forwarding attribute of the target node, the method further includes: setting the pointing-to-exit attribute of the target node in the port aggregation group as the next-hop information. With this implementation, the virtual private may have a pointing-to-exit attribute. The pointing-to-exit attribute of the virtual private (VP) may be set directly as the next-hop information, i.e., instead of being an ECMP group, the VP exit points directly to a next hop.

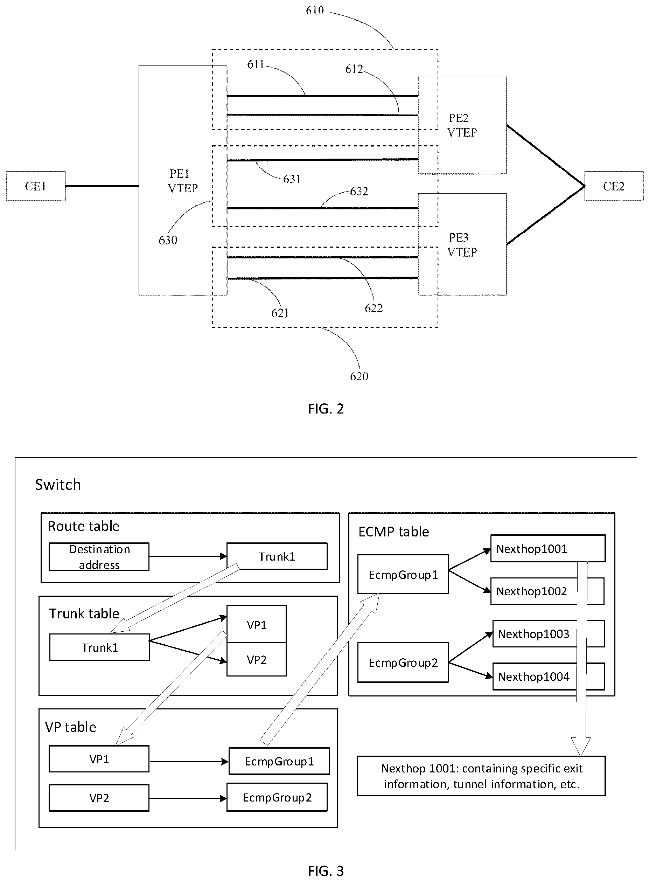

FIG. 2 shows a schematic diagram of a path in an embodiment of the present application. In FIG. 2, an overlay equivalent path from CE1 to CE2 may include a path 631 and a path 632. A path from a PE1 virtual extensible local area network tunnel end point (VTEP) to a PE2 VTEP includes a path 611 and a path 612. A path from the PE1 VTEP to a PE3 VTEP includes a path 621 and a path 622.

In a possible implementation, the VP is utilized for processing (i.e., the above node is a virtual private), then the equivalent path 631 and path 632 form a first Overlay ECMP Group 630. The path 611 and the path 612 form a first Underlay ECMP Group 610. The equivalent path 621 and path 622 form a second Underlay ECMP Group 620. VP1 may be set as the overlay path where PE1 VTEP points to PE2 VTEP and VP2 as the Overlay path where PE1 VTEP points to PE3 VTEP. In turn, the first Underlay ECMP Group 610 of the two paths where PE1 VTEP points to PE2 VTEP is written into VP1. The second Underlay ECMP Group 620 of the two paths where PE1 VTEP points to PE3 VTEP is written into VP2. Trunk1 is set, which contains two members, VP1 and VP2, and then an overlay path exit from CE1 to CE2 is sent down to point to Trunk1. A Hash strategy for the overlay is configured into Trunk1, and a Hash strategy for the underlay is configured into the first Underlay ECMP Group 610 and the second Underlay ECMP Group 620.

FIG. 3 shows a schematic diagram of a possible implementation of utilizing a VP to implement ECMP iterations for an overlay and an underlay. As shown in FIG. 3, after configuration, a route table, a Trunk table, a VP table, and an ECMP table of a switch may be obtained. In terms of the overlay, the route table sends down a path exit to point to Trunk1 of the Trunk table. Trunk1 contains two members of the VP table, VP1 and VP2. VP1 points to an exit of ECMPGroup 1 of the ECMP table. VP2 points to an exit of ECMPGroup 2 of the ECMP table. In terms of the underlay, the ECMP table of the chip is used directly to complete the processing related to the underlay ECMP with the ECMP table, so that exit ECMP information of one underlay may be obtained, in which the exit ECMP information of the underlay contains specific exit information, tunnel information, etc.

As shown in FIG. 3, assuming that the destination address of a certain data packet is 10.10.10.1, it matches Trunk 1, and it matches VP 1 in Trunk 1 according to the HASH rule set by the Trunk group, whereas VP1 corresponds to the ECMP group 1. Then, the hash value is calculated and obtained according to the HASH rule set by the ECMP table. The hash value matches next-hop information Nexthop 1001 corresponding to ECMP group 1 in the ECMP table, in which Nexthop 1001 may include specific exit information, tunnel information, etc. The data packet is forwarded according to information in Nexthop 1001.

In this embodiment, the overlay may use the hash rule for the Trunk group, while the underlay uses the hash rule for the ECMP, which can complete two layers of different hash algorithms, and satisfy two layers of ECMP load balancing data forwarding. The configuration of an overall network using the VP to process the entire overlay ECMP to underlay's ECMP nesting is completed, the configuration of HASH may be performed at two layers respectively, and corresponding processing may also be performed at two layers respectively for the changes of exit information.

In another possible implementation, the loopback port is utilized for processing (i.e., the above node is a loopback port), then the equivalent path 631 and path 632 form a second Overlay ECMP Group 630. The equivalent path 611 and path 612 form a third Underlay ECMP Group 610. The path 621 and the path 622 form a fourth Underlay ECMP Group 620. Loopback 1 (loopback port 1) is set as the overlay path where PE1 VTEP points to PE2 VTEP, and Loopback 2 is set as the overlay path where PE1 VTEP points to PE3 VTEP. In turn, the third Underlay ECMP Group 610 of the two paths where PE1 VTEP points to PE2 VTEP is written into the route table. The fourth Underlay ECMP Group 620 of the two paths where PE1 VTEP points to PE3 VTEP is written into the route table. After the loopback port encapsulates the packet in the tunnel, the exits of the third Underlay ECMP Group 610 and the fourth Underlay ECMP Group 620 may be found by directly looking up the route table of the underlay. Trunk1 is set, which contains two members, Loopback1 and Loopback2. The overlay path exit from CE1 to CE2 is sent down to point to Trunk1. A Hash strategy for the overlay is configured into Trunk1, and a Hash strategy for the underlay is configured into the third Underlay ECMP Group 610 and the fourth Underlay ECMP Group 620.

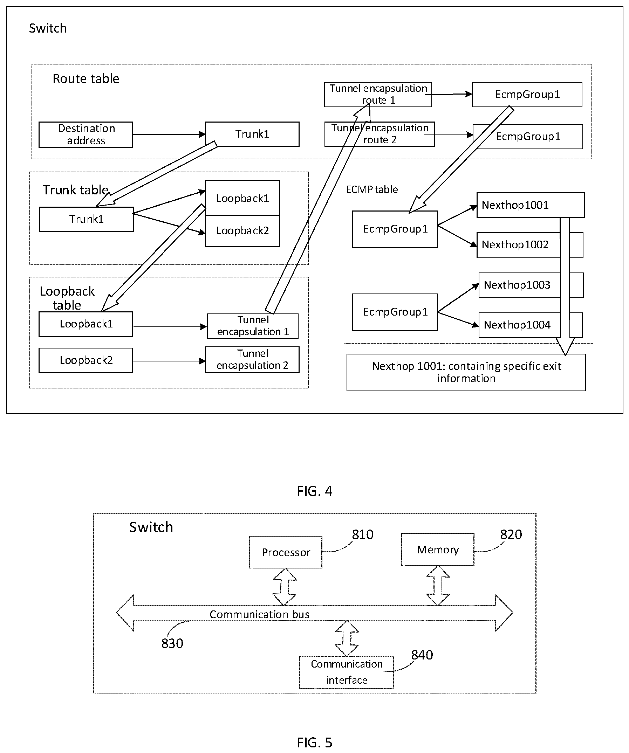

FIG. 4 shows a possible schematic diagram of utilizing a loopback port to implement ECMP iterations for an overlay and an underlay. As shown in FIG. 4, after configuration, a route table, a Trunk table, a Loopback table, and an ECMP table of a switch may be obtained. In terms of the overlay, the route table sends down a path exit to point to Trunk1 of the Trunk table. Trunk1 contains two members of the Loopback table, Loopback1 and Loopback2. Loopback1 and Loopback1 tunnel-encapsulate the path exit and write it into a tunnel encapsulation route 1 and a tunnel encapsulation route 2 of the route table. The tunnel encapsulation route 1 points to the exit of ECMPGroup1 of the ECMP table, and the tunnel encapsulation route 2 points to the exit of ECMPGroup2 of the ECMP table. In terms of the underlay, the ECMP table of the chip is used directly to complete the processing related to the underlay ECMP with the ECMP table, so that exit ECMP information of one underlay may be obtained, in which the exit ECMP information of the underlay contains specific exit information, tunnel information, etc.

As shown in FIG. 4, assuming that a destination address of a certain data packet is 10.10.10.1, it matches Trunk 1, and it matches Loopback1 in Trunk 1 according to the HASH rule set by the Trunk group, whereas Loopback1 corresponds to the tunnel encapsulation 1. While the data packet is tunnel-encapsulated and loopback-forwarded according to the tunnel encapsulation 1. The loopback data packet is received. The tunnel encapsulation route that acquires the loopback data packet is the tunnel encapsulation route 1. The ECMP group 1 corresponding to the tunnel encapsulation route 1 is acquired. Then, a hash value is calculated and obtained according to the HASH rule set by the ECMP table. The hash value matches next-hop information Nexthop 1001 corresponding to the ECMP group 1 in the ECMP table, in whichNexthop 1001 may include specific exit information. The data packet is forwarded according to information in Nexthop 1001.

In this embodiment, the configuration of an overall network using the loopback port to process the entire overlay ECMP to underlay ECMP nesting is completed. Unlike the processing of the VP, since the loopback port has a capability of secondary forwarding, when the packet points to the loopback port for the first time, it is the encapsulated tunnel information that completes forwarding at the overlay layer. Whereas after the packet is looped back for the second time, the underlay route may be directly found to complete the second forwarding.

Optionally, as shown in FIG. 5, an embodiment of the present application further provides a switch, including a processor 810, a memory 820, a program or instructions that are stored on the memory 820 and can be run on the processor 810. The program or instructions, when executed by the processor 810, implement various processes of the above method embodiment, and can achieve the same technical effect, which will not be repeated herein to avoid repetition.

An embodiment of the present application further provides a readable storage medium. The readable storage medium stores a program or instructions thereon. The program or instructions, when executed by a processor, implement various processes of the above data packet transmission method embodiment, and can achieve the same technical effect, which will not be repeated herein in order to avoid repetition.

The processor is a processor in the terminal described in the above embodiment. The readable storage medium includes a computer-readable storage medium such as a computer read-only memory (ROM), a random access memory (RAM), a magnetic disk or an optical disk, etc.

An embodiment of the present application further provides a chip. The chip includes a processor and a communication interface. The communication interface and the processor are coupled. The processor is configured to run a program or instructions to implement various processes of the above data packet transmission method embodiment, and can achieve the same technical effect, which will not be repeated herein to avoid repetition.

It should be understood that the chip referred to in the embodiment of the present application may also be referred to as a system level chip, a system chip, a chip system, or chip of a system on chip, etc.

An embodiment of the present application further provides a computer program/program product. The computer program/program product is stored in a storage medium. The computer program/program product is executed by at least one processor to implement various processes of the above data packet transmission method embodiment, and can achieve the same technical effect, which will not be repeated herein to avoid repetition.

It needs to be noted that in this context, terms "include", "contain", or any other variants thereof, are intended to cover non-exclusive inclusion, so that a process, method, item or apparatus that includes a series of elements includes not only those elements but also other elements that are not explicitly listed or further includes elements that are inherent to such a process, method, item or apparatus. Without more limitations, an element defined by a phrase "including a ..." does not exclude the existence of other identical elements in the process, method, item or apparatus including the element. In addition, it needs to be noted that the scopes of the methods and apparatuses in the embodiments of the present application are not limited to performing the functions in the order shown or discussed, but may also include performing the functions in a substantially simultaneous mode or in a reverse order according to the functions involved, e.g., the described methods may be performed in a different order than described, and various steps may be added, omitted, or combined. In addition, features described with reference to some examples may be combined in other examples.

Through the description of the above implementation, those of skill in the art can clearly understand that the above embodiment method may be realized by means of software plus a necessary general hardware platform, and of course, it can also be realized by hardware, but in many cases the former is the better implementation. Based on the understandings, the technical solution of the present application can be embodied in the form of a computer software product essentially or on the part of contributions to the prior art. The computer software product is stored in a storage medium (such as the ROM/RAM, the magnetic disc and the optical disc) and includes a plurality of instructions used to enable a terminal (which may be a mobile phone, a computer, a server, an air conditioner, or a network device, etc.) to perform the methods described in various embodiments of the present application.

The embodiments of the present application are described above in conjunction with the accompanying drawings, but the present application is not limited to the above specific implementations, and the above specific implementations are merely schematic and not limiting, and those of ordinary skill in the art, under the inspiration of the present application, can make many forms without departing from the scope of protection of the purposes and claims of the present application, all of which are under the protection of the present application.

## Claims

1. A data packet transmission method, comprising:
acquiring a port aggregation group corresponding to a destination address of a data packet to be transmitted, wherein the port aggregation group comprises at least one node, the node has a port attribute and a forwarding attribute, and the port aggregation group indicates an exit of an overlay network of the data packet;
Performing a hash calculation on the data packet on the basis of a first hash rule pre-configured for the port aggregation group, to obtain a first hash value;
acquiring a target node matching the first hash value in the port aggregation group, wherein the exit of the target node points to an underlay network;
acquiring next-hop information on the basis of a forwarding attribute of the target node; and
transmitting the data packet on the basis of the next-hop information.

2. The method according to claim 1, wherein in a case where the exit of the target node points to an exit equal cost multi path (ECMP) group, acquiring the next-hop information on the basis of the forwarding attribute of the target node comprises:
acquiring the exit ECMP group corresponding to the target node;
performing hash calculation on the data packet on the basis of a second hash rule pre-configured for the ECMP group, to obtain a second hash value; and
acquiring next-hop information matching the second hash value in the exit ECMP group.

3. The method according to claim 2, wherein the node comprises a virtual private, and the forwarding attribute comprises a pointing-to-exit attribute; and
before acquiring the exit ECMP group corresponding to the target node, the method further comprises: setting the pointing-to-exit attribute of the target node in the port aggregation group as the exit ECMP group.

4. The method according to claim 1, wherein the node comprises a virtual private, and the forwarding attribute comprises a pointing-to-exit attribute; and
before acquiring the next-hop information on the basis of the forwarding attribute of the target node, the method further comprises: setting the pointing-to-exit attribute of the target node in the port aggregation group as the next-hop information.

5. The method according to claim 2, wherein the node comprises a loopback port; the forwarding attribute comprises a loopback forwarding attribute; and
acquiring the exit ECMP group corresponding to the target node comprises:
acquiring target tunnel encapsulation information corresponding to the target node;
encapsulating the data packet according to the target tunnel encapsulation information and then forwarding it via the loopback port; and
receiving the loopback data packet via the loopback port, and acquiring the exit ECMP group corresponding to an underlay route according to the underlay route of the loopback data packet.

6. The method according to claim 5, wherein before acquiring the port aggregation group corresponding to the destination address of the data packet to be transmitted, the method further comprises:
configuring tunnel encapsulation information corresponding to each loopback port in the port aggregation group.

7. The method according to any one of claims 1 to 6, wherein before acquiring the port aggregation group corresponding to the destination address of the data packet to be transmitted, the method further comprises:
configuring the port aggregation group; and
configuring a source provider edge (PE) device and a destination PE device of an overlay path corresponding to each node in the port aggregation group.

8. The method according to claim 7, further comprising:
updating, in a case where an overlay path corresponding to the at least one node in the port aggregation group changes, the port aggregation group and the overlay path corresponding to the node in the port aggregation group on the basis of changed information of the at least one node.
· The method according to claim 7, further comprising:
updating, in a case where an overlay path corresponding to the at least one node in the port aggregation group changes, the port aggregation group and the overlay path corresponding to the node in the port aggregation group on the basis of changed information of the at least one node.

9. The method according to any one of claims 2 to 3 and 5 to 6, further comprising:
updating the next-hop information of the exit ECMP group when the next-hop information in the exit ECMP group changes.

10. A switch, comprising a processor and a memory, wherein the memory stores a program or instructions runnable on the processor, and the program or instructions, when executed by the processor, implement steps of the data packet transmission method according to any one of claims 1 to 9.

11. A readable storage medium, storing a program or instructions thereon, wherein the program or instructions, when executed by a processor, implement steps of the data packet transmission method according to any one of claims 1 to 9.
